(19) **Europäisches Patentamt European Patent Office Office européen des brevets**

(11) **EP 2 811 719 B1**

(12) **EUROPEAN PATENT SPECIFICATION**

(45) Date of publication and mention
of the grant of the patent:
**09.08.2017 Bulletin 2017/32**

(51) Int Cl.:
*H04L 29/08* (2006.01)          *H04L 12/26* (2006.01)
*H04L 12/24* (2006.01)

(21) Application number: **13305734.9**

(22) Date of filing: **03.06.2013**

(54) **Methods and systems for providing alto metrics reflecting application endpoint performances**

Verfahren und Systeme zur Bereitstellung von ALTO-Metrik zur Widerspiegelung von Anwendungsendpunktleistungen

Procédés et systèmes pour fournir des métriques ALTO représentant les performances d'applications à leur point d'extrémité

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.12.2014 Bulletin 2014/50**

(73) Proprietor: **ALCATEL LUCENT**
**92100 Boulogne-Billancourt (FR)**

(72) Inventors:
 • **Randriamasy, Sabine**
  **91620 Nozay (FR)**
 • **Faucheux, Frédéric**
  **91620 Nozay (FR)**
 • **Kerboeuf, Sylvaine**
  **91620 Nozay (FR)**

(74) Representative: **Berthier, Karine et al**
**Alcatel-Lucent International**
**148/152, route de la Reine**
**92100 Boulogne-Billancourt (FR)**

(56) References cited:
**EP-A1- 2 582 102**

 • **RANDRIAMASY S ET AL: "Multi-Cost ALTO; draft-randriamasy-alto-multi-cost-07.txt", MULTI-COST ALTO; DRAFT-RANDRIAMASY-ALTO-MULTI-COST-07. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2012 (2012-10-19), pages 1-37, XP015088131, [retrieved on 2012-10-19]**
 • **NIVEN-JENKINS B ET AL: "Use Cases for ALTO within CDNs; draft-jenkins-alto-cdn-use-cases-03.txt", USE CASES FOR ALTO WITHIN CDNS; DRAFT-JENKINS-ALTO-CDN-USE-CASES-03.TX T, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 10 June 2012 (2012-06-10), pages 1-14, XP015083248, [retrieved on 2012-06-10]**
 • **ALIMI R ET AL: "ALTO Protocol; draft-ietf-alto-protocol-15.txt", ALTO PROTOCOL; DRAFT-IETF-ALTO-PROTOCOL-15.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 May 2013 (2013-05-08), pages 1-79, XP015091122, [retrieved on 2013-05-08]**

- RANDRIAMASY S ET AL: "ALTO Cost Schedule; draft-randriamasy-alto-cost-schedule-02.tx t", ALTO COST SCHEDULE; DRAFT-RANDRIAMASY-ALTO-COST-SCHEDUL E-02.TX T, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2012 (2012-10-19), pages 1-17, XP015088130, [retrieved on 2012-10-19]

**Description**

FIELD OF THE INVENTION

The present invention relates to methods and systems for providing ALTO metrics reflecting user quality-of-experience for content delivery applications.

BACKGROUND OF THE INVENTION

Internet usage is increasing rapidly all over the globe and tends to be ubiquitous and accessible from various end-user devices, leading to an ever evolving data exchange, often downloading as much as uploading. Therefore, Internet services are expected to scope with mobility of end-users, massive service requests, and heterogeneous access technologies, while ensuring the best possible Quality-of-experience (QoE) to each user.

QoE shall be regarded as the manner in which the user perceives the quality of an application session in terms, for example, latency, bit rate, freeze or rebuffering, impaired audio/video frames, application packet loss. More generally, QoE reflects the overall acceptability (i.e. sensation, perception, satisfaction) and opinion of users as they interact with the experienced service(s).

It follows that an accurate description of the qualitative performance of a content delivery application is more than ever of current interest for network operators. Such measure is particularly important for content delivery applications that are highly demanding on QoE, such as Peer-to-Peer (P2P) applications, real-time communications, Content Delivery Networks (CDN), on-demand video services, files sharing, files streaming, IPTV, or cloud-based applications. In fact, content delivery applications must often choose one or more suitable candidates from a selection of peers offering the same resource or service. The chosen candidate(s) for serving a user request has/have a direct impact on the experienced quality.

Accordingly, operators of application networks such as CDN endeavor to improve the QoE of their applications (such as video download or streaming) while transport network operators, i.e. ISPs, aim at minimizing the ever increasing transport costs induced by contemporary applications. In this regard, IETF has proposed a method for Application-Layer Traffic Optimization (ALTO). The ALTO IETF client-server protocol provides applications with guidance to select target endpoint(s) (i.e. peers, hosts, or application servers) from a set of candidates that are able to provide a desired data resource. This guidance is based on parameters that affect performance and efficiency of the data transmission between the hosts (such as the topological distance). Document XP015088131, draft-randriamasy-alto-multi-cost-07, discloses the idea of integrating quality-of-experience metrics with topology metrics. In particular, ALTO is gaining traction among network providers as it expresses their preferences and abstracts their network topology. Provision by ISPs of ALTO Costs on their topology via routing protocols is widely admitted but ALTO information is to be provided by CDN as well as Cloud providers or Data Center operators for their customers.

Indeed, in order to reduce the resource consumption in the underlying network infrastructure, ALTO path cost values as well as ALTO endpoint metrics should be provided by the network operator and/or any other party having visibility on the endpoint activity (such as CDN or Data Center (DC) operators) to the deployed ALTO servers. In return, ALTO servers provide requesting ALTO clients with information, currently such as the network operator-centric view on the network topology, and the candidate endpoints with attributes such as their routing cost or connectivity type. Nevertheless, the question of how to provide and use ALTO Endpoint Cost information reflecting QoE in a reliable way is still pending.

ALTO Servers are meant to provide information that cannot be gathered via end to end real-time like measurement tools and therefore ALTO does not cover information such as RTT or congestion specific metrics. Afterwards, the proposed endpoint costs are returned by ALTO servers regardless of many the QoE requirements of end-users.

User QoE information such as application packet loss, jitter, freeze or re-buffering, bit rate, content access time, objective content quality measures are considered out of the ALTO scope, as they can be gathered by end systems and applications can get this information on their own side and combine it to ALTO information to choose their Endpoints. However, such information collected individually cannot be exploited immediately; the gathered samples usually small are statistically insignificant; exploiting them requires skills, technology and methodology available only to a restricted community of application network providers that on the other hand rarely or reluctantly distribute QoE information to their application clients or to their Internet Service Providers.

Some ALTO-friendly ISPs, possibly running their own data service, on their side are not always willing to unveil information on path or endpoint load, while the ALTO routing cost is not sufficient to prevent the use of an endpoint having a low QoE performance, as it simply does not involve QoE information from applications.

As a consequence, users and applications may amplify network problems when they uselessly keep trying to connect to bad performance quality endpoints and end up stopping the connection. On the other hand, QoE information is emblematic of applications such as video streaming and on-line processing on distributed clouded (i.e. virtual) machines, whose number of users and traffic volume is currently exploding. Network provider customers such as end users or content providers will increasingly make their choices upon QoE among a high diversity of content and resources locations either to place or use the content.

One object of the present invention is to provide ALTO metrics reflecting application endpoint performances on user QoE.

Another object of the present invention is to propose several modes in which an ALTO Server can provide QoE based ALTO Cost values, preferably combined with traditional ISP centric ALTO metrics to refine the selection of application Endpoints.

Another object of the present invention is to provide network providers (whether pure ISP or CDN or Cloud Provider) with information enabling evaluation of end user QoE such as Application Packet Loss, Data Flow Freeze or re-buffering (e.g. image freeze), flow jitter (e.g. video jitter).

SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later. The invention is disclosed in the appended claims. Various embodiments relate to a method for providing ALTO metrics reflecting user quality-of-experience of application endpoints, the method comprising the following steps:

- measuring quality-of-experience metrics on application client endpoints;
- collecting values for said metrics over time and space;
- aggregating the collected metric values and abstracting them into ALTO quality-of-experience metrics;
- combining the ALTO quality-of-experience metrics with network topology based ALTO metrics into quality-of-experience aware topology ALTO cost values;
- providing the quality-of-experience aware topology ALTO cost values to authorized requesting ALTO clients. Further, various embodiments relate to a system for providing ALTO metrics reflecting user quality-of-experience of application endpoints, this system comprising
- quality-of-experience monitoring systems configured to measure the quality-of-experience metrics on application client endpoints;
- an ALTO server managing entity configured to:

   - collect in a database quality-of-experience metrics values,
   - aggregate the collected quality-of-experience metrics values over time and space;
   - an ALTO agent configured to abstract the collected quality-of-experience metrics values into ALTO quality-of-experience metrics;

- an ALTO server configured to

   - combine the ALTO quality-of-experience metrics with network topology based ALTO metrics into quality-of-experience aware topology ALTO cost values;
   - provide the said quality-of-experience aware topology ALTO cost values to authorized requesting ALTO clients.

Further, various embodiments relate to a computer program implemented on a processing unit of a computer, said program including code sections for performing instructions corresponding of the above methods.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

DESCRIPTION OF THE DRAWING

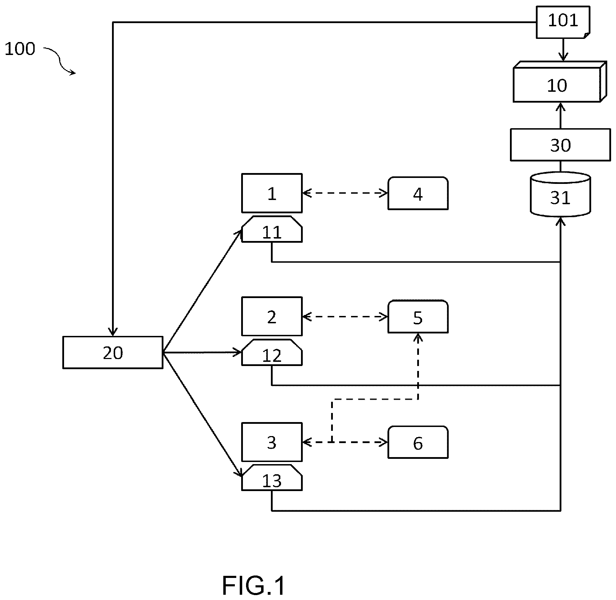

The objects, advantages and other features of various embodiments will become more apparent from the following disclosure and claims. The following non-restrictive description of preferred embodiments is given for the purpose of exemplification only with reference to the accompanying drawing in which FIG. 1 is a schematic diagram illustrating functional components according to various embodiments.

DETAILED DESCRIPTION OF ILLUSTRATIVE EMBODIMENTS

Figure 1 illustrates a QoE measurement system **100** and associated method to transfer QoE related information to an ALTO server **10**.

This QoE measurement system **100** includes a plurality of application QoE monitoring systems (AQMS) **11-13** deployed, respectively, on application client endpoints **1-3** so as to monitor QoE thereon.

Application client endpoint **1-3** is meant, broadly and not restrictively, to include any end user equipment or software (such as, network probing equipments, telephone handsets, smartphones, computers, personal digital assistants, mobile applications, or computer program products) able to connect to an application server **4-6** (i.e. a server, a data center, a cache, a server cluster, or more generally a source) making available a service and/or a resource for application client endpoints **1-3**. The application server **4-6** may be a CDN Server, one or a cluster of physical machines in a DC involved in a virtualized application

Illustrative examples of applications proposed by the application server **4-6** include video download and streaming, cloud-based or business applications involving audio/video streams and virtualized entertainment applications involving several physical endpoints performing a service for an application client Endpoint (EP).

The AQMS **11-13** are configured to measure QoE metrics and report values with regard to these metrics to an AQMS information base **31**.

Non-exhaustive illustrative examples of QoE metrics include bit rate, jitter, packet loss, latency, and mean opinion score, flow freeze (also named re-buffering), impaired flow/frame ratio (caused by packet loss), average bit rate, end-to-end delay and video quality score.

In particular, the "ALTO Application Packet Loss" (or impaired flow/frame ratio) refers to an impaired frame ratio and points here to a percentage of video frames decoded with impairment caused by non recovered packet loss occurring during the transmission between the video server and the video client. Some multimedia application are running over non reliable transport protocols such as UDP and a packet loss will provoke impairment in the corresponding image and in the neighbor images because of the error propagation in video compression. It depends of the structure of the video (I/P/B pictures).

For example, it may be computed as follows over a given measurement time window of L second duration including frames Fi to Fi+N:

$$impaired\ frame\ ratio = \frac{1}{N}\sum_{j=i}^{i+N} E_j \quad , \quad where\ \mathrm{E}_j = \begin{cases} 0 & for\ good\ frame \\ 1 & for\ impared\ frame \end{cases}$$

where N is the number of frames displayed over the measurement time window. It corresponds to the ratio [0,1] of frames that are impaired by video artifacts over the time window.

Furthermore, the "ALTO Flow Freeze" (or ALTO Freeze Ratio) reflects a ratio that extends of the "video image freeze/rebuffering" metric to traffic flows of applications frequently running on CDNs and Data Centers.

For example, it may be computed over a measurement time window L as follow:

$$freeze\ ratio = \frac{\sum_{j=i}^{i+N} Z_j \times DT_j}{L} \quad , \quad where\ \mathrm{Z}_j = \begin{cases} 1 & for\ frozen\ frame \\ 0 & otherwise \end{cases}$$

where N is the number of frames displayed over the measurement time window, $DT_j$ the duration frame is displayed and L is the duration of the window.

ALTO Packet Loss and ALTO Flow Freeze are the aggregation of these measures at the level of the application server **4-6**. The aggregation over time is achieved upon the specification of an ALTO server managing entity **101**. These measures can be abstracted by an ALTO agent **30** in terms of Costs not necessarily representing a percentage but merely denoting a value to be minimized.

Accordingly, ALTO Flow Freeze and ALTO Application Packet Loss metrics are categorized as ALTO QoE metrics. It is to be noted that the term "ALTO metrics" is referred to as "ALTO Cost Type" in current ALTO IETF protocol documents.

An ALTO agent **30** is in charge of abstracting the collected ALTO QoE metrics values in the central database **31**. In fact, according to agreements existing between entities providing and using ALTO information, the ALTO server **10** may give the real values or abstracted values, which preserve confidentiality of data while remaining relevant.

In one embodiment the QoE measurement system **100** further comprises a an ALTO agent **20** configured to trigger the sending of ALTO QoE metrics values from the appropriate AQMS **11-13** to the central database **31**, according to instructions received from the entity **101**, configured to manage the ALTO Server **10**.

Other possible embodiments of such a system are described in the co-pending patent application entitled "Methods And Systems For Monitoring The Quality-Of-Experience Of An Application Available Over A Network" filed by the same applicant.

In one embodiment the acquisition of QoE information by the ALTO server **10** may be performed by a tool gathering measurements at application clients such as the one distributed by Alcatel Lucent®, described in the patent EP 2 400 758 "Method to determine the global quality of a video stream", hereafter referred to as VITALU.

Various embodiments concerning the VITALU tool are disclosed in the previously mentioned co-pending patent application.

Various embodiments propose ALTO metrics that reflect endpoint performances on user QoE, here referred to as ALTO QoE metrics.

Following a given ALTO QoE metric selected by an ALTO client, the ALTO server **10** is in charge of providing values regarding this metric.

In one embodiment following a request of an ALTO client, the ALTO Server **10** may provide QoE based ALTO Cost values in several modes, preferably combined with traditional ISP-centric ALTO metrics to refine the selection of application Endpoints.

In one embodiment, to cope with the ALTO requirements and scope, the values provided for these ALTO QoE metrics are not real time data as they stem from measurements aggregated over time and space. They are typically gathered at application endpoints **1-3** by CDN or Data Center (DC) services providers, including ISPs providing these services. To cope with the ALTO protocol objective, QoE based ALTO metrics are to be combined with ISP- centric metrics such as "ALTO routing cost" the main goal of which is to guide applications so as to minimize expensive transit traffic.

Advantageously, most of these metrics indicate issues related to congestion or transmission errors in either the network path or at the endpoint, the measures of which are not always available to applications. They are highly significant for application guidance as most of popular and greedy resources applications are multimedia applications that need a controlled end delay and that are very sensitive to packets loss and freeze when they run on protocols like UDP, and are very sensitive to freeze when they run on protocols like TCP.

Such metrics are further referred to as "network topology based ALTO metrics".

Advantageously, ALTO QoE metrics also avoid the issue of having to unveil whether an encountered problem is located on the path (ISP side) or at the Endpoint (CDN/DC service provider), in particular for ISPs running their own Data Services.

The ALTO QoE information is distributed by Data Service providers (whether ISP or independent) or IPSs having access to their information. The term "Data Service Provider" is intended to encompass CDN-based and Cloud-based content, resources providers, or CDN and Datacenter operators.

The ALTO QoE information is distributed to Customers of CDN or DC providers. Typically, providers of high revenue content demand a guaranteed QoE level for their potential viewers and may involve in the content placement with the assistance of ALTO Endpoint Cost Maps.

In one embodiment, ALTO QoE metrics that may vary over time are coupled with network topology based ALTO metrics values that are more static, such as administrative cost.

Coupled values could then be provided in the form of scheduled ALTO cost values, over specified time frames, as suggested in another ALTO protocol extension, as described in "ALTO Cost Schedule", S. Randriamasy (editor) and N. Schwan, IETF draft draft-randriamasy-alto-cost-schedule-02, October 19th 2012, scheduled at the 85th IETF, Altlanta GA, http://tools.ietf.org/html/draft-randriamasy-alto-cost-schedule-02.

Advantageously the ALTO QoE metrics may be combined with "usual" network topology based ALTO metrics such as routing cost or hop count, to refine the selection on Endpoints that for example have an equal hop count or an equal routing cost.

The "usual" ALTO metrics are defined in the different versions of the "draft-ietf-alto-protocol" (*http://datatracker.ietf.org/doc/draft-ietf-alto-protocol/*") and referred to as ALTO cost metrics.

The network topology based ALTO metrics regarding QoE are hereinafter referred to as "QoE aware topology ALTO cost metrics".

In one embodiment the QoE aware topology ALTO cost metric values may be provided by the ALTO server **10** directly and individually to authorized ALTO Clients. The case of providing the "real" QoE aware topology ALTO cost values is designed herein as an "explicit" mode.

By contrast a "hidden" mode refers to a situation where QoE aware topology ALTO cost values are provided by the ALTO server **10** with abstracted values, which preserve confidentiality of data while remaining relevant. In one embodiment, this abstraction may be performed by an abstracting entity **30**. Such an abstracting entity **30** is detailed in the previously mentioned co-pending patent application.

In one embodiment combination modes may be supported by the ALTO server **10**. These modes enable to create combinations of traditional ALTO costs (with ISP-centric metrics) with ALTO QoE metrics proposed in this invention.

An ALTO Client may request the QoE aware topology ALTO cost values for a set of metrics including ALTO QoE metrics. Depending on its specified capabilities and on the ALTO client authorization the ALTO Server **10** may provide QoE aware topology ALTO cost values in different possible modes either "explicit" or "hidden":

In "explicit" mode the ALTO server **10** specifies the availability of QoE metrics in its capabilities and the ALTO client explicitly selects the QoE metrics besides the "usual" topology ALTO metric (i.e. network topology based ALTO metrics) where typical topology ALTO metrics include routing cost and hop count. Then the corresponding Endpoint Cost values (QoE aware topology ALTO cost values) are delivered by the ALTO server **10**.

In the "QoE Tie Break option" the ALTO server **10** specifies the availability of QoE metrics in its capabilities and lists the "usual" ALTO metrics that can be provided with a QoE based tie break. The ALTO Client then explicitly selects the QoE metrics besides the "usual" topology metric (i.e. network topology based ALTO metrics). For Endpoints having similar values (i.e. these values do not differ for more than a value R) on a "usual" metric selected with a tie break option, the selected ALTO QoE metric is used to tie break the Endpoints. This option may comprise "explicit" or "hidden" modes:

Explicit QoE Tie Break: In this mode the ALTO topology cost values are sent for all Endpoints, and, for the Endpoints of similar cost value, they are sent along with their ALTO QoE cost value;

Hidden Ordinal QoE Tie break: this mode works when the "ordinal" ALTO cost mode is selected by the ALTO Client, i.e. the Endpoint cost values are their rank. In this case, the Endpoints are ordered in 2 following steps: firstly, with respect to their topology cost and for EPs of similar cost, secondly with respect to their QoE cost. As a final result ALTO QoE Cost values are provided to the ALTO client, with abstracted values: these values are ranked but the real Endpoints Costs or QOE values are not communicated.

As an illustrative non-limitative example for QoE Tie Break mode, it is assumed that the ALTO server **10** supports the "Hidden Ordinal QoE Tie break" option.

It is also assumed that:

- this option is available on ALTO cost metric "hop count" for numerical values differing from less than R=1, that is for equal hop count values
- the available tiebreak ALTO QoE cost metric for "hop count" is "flowfreeze"

It is also assumed that an ALTO client requests:

- a ranking service for "hopcount" from a source endpoint SRC to 5 destination endpoints "EPk";
- a tiebreak on hopcount based on the " flowfreeze " values.

If the numerical "hopcount" value is:

"ipv4:@EP1": 1, "ipv4:@EP2": 1, "ipv4:@EP3": 2, "ipv4:@EP4": 3, "ipv4:@EP5": 3,

and the numerical "flowfreeze" abstracted value is:

"ipv4:@EP1": 6, "ipv4:@EP2": 3, "ipv4:@EP3": 4, "ipv4:@EP4": 10, "ipv4:@EP5": 8,

then the ordinal hopcount values provided by the ALTO server 10 with a tie-break on flowfreeze will be:

"ipv4:@EP2": 1, "ipv4:@EP1": 2, "ipv4:@EP3": 3, "ipv4:@EP5": 4, "ipv4:@EP4": 5

In one embodiment, the values provided by the ALTO server **10** may be associated to a reliability score. This reliability score is based on values such as the popularity (Zipf density), hit rate, number of samples with regard to number of hits or measurement frequency.

Advantageously the ALTO QoE metrics proposed here reflect emblematic and widely used and understood multimedia application QoE metrics. All combination modes with other ALTO Costs are covered, including direct value provision.

Advantageously, as the Internet usage market now concentrates on heavy data and video based QoE demanding applications, end users and network providers (whether pure ISP or CDN or Cloud Provider) can take benefit, thanks to the above-described methods and systems, of a selection of their application endpoints or paths that involves QoE information such as Application Packet Loss, Data Flow Freeze or re-buffering (e.g. image freeze), flow jitter (e.g. video jitter). In fact, the disclosed embodiments enable to optimize application traffic with regard to QoE metrics, coupled with traditional transport topology-based network information. The coupling is performed through the extension of the ALTO Service that is gaining traction among network providers needing to optimize the transport costs of application traffic while satisfying their customers.

Advantageously, to preserve application data confidentiality, the ALTO QoE information is not necessarily unveiled to the ALTO Client. Otherwise, the ALTO QoE information may be an abstraction of real QoE measures or exposed only to authorized ALTO Clients.

Moreover, QoE metrics, advantageously, avoid the issue of having to unveil whether the problem is on the path (ISP side) or at the Endpoint (CDN/DC service provider), in particular for ISPs running their own Data Services.

**Claims**

1. A method for providing Application-Layer Traffic Optimization, ALTO, metrics reflecting user quality-of-experience of application endpoints, this method comprising the following steps:

   - measuring quality-of-experience metrics on application client endpoints (**1-3**);
   - collecting values for said quality-of-experience metrics over time and space;
   - aggregating the collected quality-of-experience metric values and abstracting them into ALTO quality-of-experience metrics;
   - combining the ALTO quality-of-experience metrics with network topology based ALTO metrics into quality-of-experience aware topology ALTO cost values;
   - providing the quality-of-experience aware topology ALTO cost values to authorized requesting ALTO clients.

2. The method of claim 1 wherein the quality-of-experience aware topology ALTO cost values are provided in an explicit mode or in a hidden mode.

3. The method of claim 2, wherein, in the explicit mode, topology cost values and quality-of-experience values are provided following a selection of corresponding network topology based ALTO metrics and ALTO quality-of-experience metric.

4. The method of any of claims 2-3, wherein the explicit mode comprises an Explicit QoE Tie Break option.

5. The method of claim 2, wherein, in the hidden mode, network topology based ALTO metrics are provided with ordinal values following a selection of at least one ALTO quality-of-experience metric.

6. The method of any claims 5, where the hidden mode comprises a Hidden Ordinal QoE Tie break option.

7. The method of claim 6, wherein the Hidden Ordinal QoE Tie break option ranks network topology based ALTO values with respect to ALTO quality-of-experience metrics.

8. The method of any of the preceding claims, wherein one quality-of-experience ALTO metric is an impaired flow/frame ratio or an abstraction of it.

9. The method of claim 8, wherein the impaired flow/frame ratio metric is computed over a given measurement time window of L second duration including frames Fi to Fi+N as follow:

$$impaired\ frame\ ratio = \frac{1}{N}\sum_{j=i}^{i+N} E_j \quad , \quad where\ E_j = \begin{cases} 0 & for\ good\ frame \\ 1 & for\ impared\ frame \end{cases}$$

where N is the number of frames displayed over the measurement time window.

10. The method of any of the preceding claims, wherein one quality-of-experience ALTO metric is a flow freeze ratio or an abstraction of it.

11. The method of claim 10, wherein the flow freeze ratio is computed over a measurement time window L as follows:

$$freeze\ ratio = \frac{\sum_{j=i}^{i+N} Z_j \times DT_j}{L} \quad , \quad where\ Z_j = \begin{cases} 1 & for\ frozen\ frame \\ 0 & otherwise \end{cases}$$

where N is the number of frames displayed over the measurement time window, $DT_j$ is the duration frame and L is the duration of the window.

12. A system providing Application-Layer Traffic Optimization, ALTO, metrics reflecting user quality-of-experience of application endpoints, this system comprising

- quality-of-experience monitoring systems (**11-13**) configured to measure the quality-of-experience metrics on application client endpoints (**1-3**);
- an ALTO server managing entity (**101**) configured to:

- collect in a database (**31**) values for said quality-of-experience metrics;
- aggregate the collected quality-of-experience metrics values over time and space;
- an ALTO agent (**30**) configured to abstract the collected quality-of-experience metrics values into ALTO quality-of-experience metrics;

- an ALTO server (**10**) configured to

- combine the ALTO quality-of-experience metrics with network topology based ALTO metrics into quality-of-experience aware topology ALTO cost values;
- provide the said quality-of-experience aware topology ALTO cost values to authorized requesting ALTO clients.

13. Computer program implemented on a processing unit of a computer, said program including code sections for performing instructions corresponding to the steps of a method according to any of claims 1-11.

**Patentansprüche**

1. Verfahren für das Bereitstellen von Metriken für die Anwendungsschicht-Verkehrsoptimierung (Application-Layer Traffic Optimization, ALTO), welche die Benutzererlebnisqualität von Anwendungsendpunkten wiedergeben, wobei dieses Verfahren die folgenden Schritte umfasst:

- das Messen von Erlebnisqualitäts-Metriken an Anwendungsclient-Endpunkten (**1 - 3**);
- das Sammeln von Werten für besagtes Erlebnisqualitäts-Metriken in zeitlicher und räumlicher Hinsicht;
- das Zusammenführen der gesammelten Werte der Erlebnisqualitäts-Metriken und ihre Abstraktion zu ALTO-Erlebnisqualitäts-Metriken;
- das Kombinieren der ALTO-Erlebnisqualitäts-Metriken mit den auf der Netzwerktopologie basierenden ALTO-Metriken zu topologischen ALTO-Kostenwerten, welche die Erlebnisqualität berücksichtigen;
- die topologischen, die Erlebnisqualität berücksichtigenden ALTO-Kostenwerte autorisierten ALTO-Clients zur Verfügung stellen.

2. Das Verfahren nach Anspruch 1, wobei die topologischen, die Erlebnisqualität berücksichtigenden ALTO-Kostenwerte in einem expliziten Modus oder in einem verborgenen Modus zur Verfügung gestellt werden.

3. Das Verfahren nach Anspruch 2, wobei die Topologie-Kostenwerte und die Erlebnisqualitäts-Werte im expliziten Modus gemäß einer Auswahl entsprechender, auf der Netzwerktopologie beruhender ALTO-Metriken und der ALTO-Erlebnisqualitäts-Metrik zur Verfügung gestellt werden.

**4.** Das Verfahren nach einem jeglichen der Ansprüche 2 bis 3, wobei der explizite Modus eine Tiebreak-Option für explizite QoE umfasst.

**5.** Das Verfahren nach Anspruch 2, wobei die auf der Netzwerktopologie beruhenden ALTO-Metriken im verborgenen Modus mit Ordinalwerten zur Verfügung gestellt werden, die einer Auswahl von mindestens einer ALTO-Erlebnisqualitäts-Metrik folgen.

**6.** Das Verfahren nach Anspruch 5, wobei der verborgene Modus eine Tiebreak-Option für verborgene ordinale QoE umfasst.

**7.** Das Verfahren nach Anspruch 6, wobei die Tiebreak-Option für verborgene ordinale QoE auf der Netzwerktopologie beruhende ALTO-Werte bezüglich der ALTO-Erlebnisqualitäts-Metriken einstuft.

**8.** Das Verfahren nach einem jeglichen der vorgenannten Ansprüche, wobei eine ALTO-Erlebnisqualitäts-Metrik ein Ratio gestörter Flows/Frames oder eine Abstraktion davon ist.

**9.** Das Verfahren nach Anspruch 8, wobei die Metrik des Ratios gestörter Flows/Frames über ein vorgegebenes Messzeitfenster von L Sekunden Dauer einschließlich der Frames Fi bis Fi+N wie folgt berechnet wird:

$$Ratio \cdot gestörter \cdot Frames \cdot = \cdot \frac{1}{N} \sum_{j=i}^{i+N} E_j \quad \text{, wobei } E_j \cdot = \cdot \begin{cases} 0 \cdot für \, guten \, Frame \\ 1 \cdot für \, gestörten \, Frame \end{cases}$$

wobei N der Anzahl von Frames entspricht, die über das Messzeitfenster hinweg angezeigt werden.

**10.** Das Verfahren nach einem jeglichen der vorgenannten Ansprüche, wobei eine ALTO-Erlebnisqualitäts-Metrik ein Flow/Freeze-Ratio oder eine Abstraktion davon ist.

**11.** Das Verfahren nach Anspruch 10, wobei das Flow/Freeze-Ratio wie folgt über ein vorgegebenes Messzeitfenster L berechnet wird:

$$Freeze - Ratio \cdot = \cdot \frac{\sum_{j=i}^{i+N} Z_j \cdot \times \cdot DT_j}{L} \quad \text{, wobei } Z_j \cdot = \cdot \begin{cases} 1 \cdot für \, frozen \, Frame \\ 0 \cdot Sonstiges \end{cases}$$

wobei N für die Anzahl von Frames steht, die über das Messzeitfenster hinweg angezeigt werden, $DT_j$ für den Zeitdauerframe und L für die Zeitdauer des Fensters.

**12.** System für das Bereitstellen von Metriken für die Anwendungsschicht-Verkehrsoptimierung (ALTO), welche die Benutzererlebnisqualität von Anwendungsendpunkten wiedergeben, wobei dieses System umfasst:

- Systeme zur Überwachung der Erlebnisqualität (**11-13**), die konfiguriert sind für das Messen der Erlebnisqualitäts-Metriken an Anwendungsclient-Endpunkten (1-3);
- eine ALTO-Serververwaltungseinheit (**101**), die konfiguriert ist für:

  - Das Sammeln von Werten für besagte Erlebnisqualitäts-Metriken in einer Datenbank (**31**);
  - das Zusammenführen der gesammelten Werte der Erlebnisqualitäts-Metriken in zeitlicher und räumlicher Hinsicht;
  - einen ALTO-Agenten (**30**), der konfiguriert ist für das Abstrahieren der gesammelten Werte der Erlebnisqualitäts-Metriken in ALTO-Erlebnisqualitäts-Metriken;

- einen ALTO-Server (**10**), der konfiguriert ist für:

  - das Kombinieren der ALTO-Erlebnisqualitäts-Metriken mit den auf der Netzwerktopologie basierenden ALTO-Metriken zu topologischen ALTO-Kostenwerten, welche die Erlebnisqualität berücksichtigen;
  - das Zurverfügungstellen der besagten, topologischen, die Erlebnisqualität berücksichtigenden ALTO-Kostenwerte für autorisierte ALTO-Clients.

**13.** Auf einem Computer installiertes Computerprogramm, wobei besagtes Programm Programmbereiche umfasst, um den Schritten eines Verfahrens gemäß den Verarbeitungseinheiten der Anweisungen eines jeglichen der Ansprüche 1 bis 11 gerecht zu werden.

**Revendications**

**1.** Procédé pour fournir des métriques d'Optimisation de Trafic de Couche Application, ALTO, reflétant une qualité d'expérience d'utilisateur de points d'extrémité d'application, ce procédé comprenant les étapes suivantes :

- mesurer des métriques de qualité d'expérience sur des points d'extrémité de client d'application (**1-3**) ;
- collecter des valeurs pour lesdites métriques de qualité d'expérience dans le temps et l'espace ;
- agréger les valeurs de métriques de qualité d'expérience collectées et les abstraire en métriques de qualité d'expérience ALTO ;
- combiner les métriques de qualité d'expérience ALTO avec des métriques ALTO basées sur la topologie de réseau en valeurs de coût ALTO de topologie compatible avec la qualité d'expérience ;
- fournir les valeurs de coût ALTO de topologie compatible avec la qualité d'expérience à des clients ALTO demandeurs autorisés.

**2.** Procédé selon la revendication 1, dans lequel les valeurs de coût ALTO de topologie compatible avec la qualité d'expérience sont fournies dans un mode explicite ou dans un mode caché.

**3.** Procédé selon la revendication 2, dans lequel, dans le mode explicite, des valeurs de coût de topologie et des valeurs de qualité d'expérience sont fournies suivant une sélection de métriques ALTO basées sur la topologie de réseau correspondantes et de métriques de qualité d'expérience ALTO.

**4.** Procédé selon l'une quelconque des revendications 2 à 3, dans lequel le mode explicite comprend une option Explicit QoE Tie Break.

**5.** Procédé selon la revendication 2, dans lequel, dans le mode caché, des métriques ALTO basées sur la topologie de réseau sont pourvues de valeurs ordinales suivant une sélection d'au moins une métrique de qualité d'expérience ALTO.

**6.** Procédé selon la revendication 5, dans lequel le mode caché comprend une option Hidden Ordinal QoE Tie break.

**7.** Procédé selon la revendication 6, dans lequel l'option Hidden Ordinal QoE Tie break classe des valeurs ALTO basées sur la topologie de réseau par rapport à des métriques de qualité d'expérience ALTO.

**8.** Procédé selon l'une quelconque des revendications précédentes, dans lequel une métrique ALTO de qualité d'expérience est un rapport flux/trame dégradé ou une abstraction de celui-ci.

**9.** Procédé selon la revendication 8, dans lequel la métrique de rapport flux/trame dégradé est calculée sur une fenêtre de temps de mesure donnée de durée L secondes incluant des trames Fi à Fi+N comme suit :

$$rapport\ de\ trame\ dégradé\ = \frac{1}{N}\sum_{j=i}^{i+N} E_j \quad , \qquad \text{où} \quad E_j = \begin{cases} 0 & pour\ bonne\ trame \\ 1 & pour\ trame\ dégradée \end{cases}$$

où N est le nombre de trames affichées sur la fenêtre de temps de mesure.

**10.** Procédé selon l'une quelconque des revendications précédentes, dans lequel une métrique ALTO de qualité d'expérience est un rapport de gel de flux ou une abstraction de celui-ci.

**11.** Procédé selon la revendication 10, dans lequel le rapport de gel de flux est calculé sur une fenêtre de temps de mesure L comme suit :

$$rapport\ de\ gel = \frac{\sum_{j=i}^{i+N} Z_j \times DT_j}{L} \quad , \quad \text{où} \quad Z_j = \begin{cases} 1 & pour\ trame\ gelée \\ 0 & autrement \end{cases}$$

où N est le nombre de trames affichées sur la fenêtre de temps de mesure, $DT_j$ est la trame de durée et L est la durée de la fenêtre.

**12.** Système fournissant des métriques d'Optimisation de Trafic de Couche Application, ALTO, reflétant une qualité d'expérience d'utilisateur de points d'extrémité d'application, ce système comprenant :

- des systèmes de surveillance de qualité d'expérience (**11-13**) configurés pour mesurer les métriques de qualité d'expérience sur des points d'extrémité de client d'application (**1-3**) ;
- une entité de gestion de serveur ALTO (**101**) configurée pour :

  - collecter dans une base de données (**31**) des valeurs pour lesdites métriques de qualité d'expérience ;
  - agréger les valeurs de métriques de qualité d'expérience collectées dans le temps et l'espace ;
  - un agent ALTO (**30**) configuré pour abstraire les valeurs de métriques de qualité d'expérience collectées en métriques de qualité d'expérience ALTO ;

- un serveur ALTO (**10**) configuré pour

  - combiner les métriques de qualité d'expérience ALTO avec des métriques ALTO basées sur la topologie de réseau en valeurs de coût ALTO de topologie compatible avec la qualité d'expérience ;
  - fournir lesdites valeurs de coût ALTO de topologie compatible avec la qualité d'expérience à des clients ALTO demandeurs autorisés.

**13.** Programme informatique mis en oeuvre sur une unité de traitement d'un ordinateur, ledit programme incluant des sections de code pour exécuter des instructions correspondant aux étapes d'un procédé selon l'une quelconque des revendications 1 à 11.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2400758 A

**Non-patent literature cited in the description**

- **N. SCHWAN.** ALTO Cost Schedule. IETF, 19 October 2012